# EUROPEAN PATENT APPLICATION

(11) **EP 1 883 212 A1**
(43) Date of publication of application: **30.01.2008**
(21) Application number: 07000183.9
(22) Date of filing: 05.01.2007
(51) Int. Cl.: H04M 1/57, H04M 1/663, H04M 1/725

(54) **Event processing apparatus and method for mobile communication terminal**

(30) Priority: 27.07.2006 KR 20060070924
(71) Applicant: Samsung Electronics Co., Ltd., Suwon-si, Gyeonggi-Do (KR)
(72) Inventor: Han, Soon Jin, Gyeonggi-do (KR)
(74) Representative: Boakes, Jason Carrington

(57) **Abstract**

An event processing apparatus and method for a mobile communication terminal are disclosed. The event processing apparatus includes a security level determiner for identifying, in response to reception of an event, a security level of the received event using registered security settings for individual persons; a security level comparator for comparing the identified security level of the event with a current security level of the mobile communication terminal; a controller for controlling, if the security level of the event is greater than the security level of the mobile communication terminal, a display operation not to display the event; and a display unit for displaying event information under the control of the controller. Thereby the user can easily protect stored private information from leakage or exposure to other parties, by changing security levels of the mobile communication terminal with respect to security levels of events.

## Description

### BACKGROUND OF THE INVENTION

### 1. Field of the Invention

The present invention relates generally to a mobile communication terminal and, more particularly, to an event processing apparatus and method for a mobile communication terminal, wherein events are processed according to security settings.

### 2. Description of the Related Art

Advanced mobile communication terminals have various functions and provide various services. Manufacturers of mobile communication terminals and mobile service providers continuously develop and provide functions and services related to, for example, a camera, a Bluetooth^{®} device, wireless local area networks, a radio, games, a calculator, a calendar, a clock, ring tones, text messages, image messages, on-line games, wireless Internet access, and caller identification.

With the availability of diversified functions and services of a mobile communication terminal, numerous pieces of private information such as photographs, messages, and call histories are generated and stored in the mobile communication terminal. The user of the mobile communication terminal endeavors not to inadvertently expose such private information to other persons.

A conventional approach to protecting private information is to provide a 'lock' function to a mobile communication terminal. However, when the lock function is set, access to stored information and use of menus in the mobile communication terminal is severely restricted, and even the user carrying the mobile communication terminal is inconvenienced by having to input an unlock password to cancel the setting of the lock function. The lock function may also discourage a user from allowing another person to use their mobile communication terminal.

### SUMMARY OF THE INVENTION

The present invention substantially solves the above problems, and an object of the present invention is to provide an apparatus and method for a mobile communication terminal that protect private information stored in the mobile communication terminal from leakage or exposure to other parties.

Another object of the present invention is to provide an apparatus and method for a mobile communication terminal, wherein an incoming event is processed according to preset security levels of the event and the mobile communication terminal.

The present invention provides an event processing apparatus for a mobile communication terminal, including a security level determiner for identifying a security level of the received event using registered security settings for individual persons in response to the reception of an event; a security level comparator for comparing the identified security level of the event with a current security level of the mobile communication terminal; a controller for controlling a display operation not to display the event, if the security level of the event is higher than that of the mobile communication terminal; and a display unit for displaying event information under the control of the controller.

The present invention further provides an event processing method for a mobile communication terminal, including identifying a security level of the received event using registered security settings for individual persons, in response to reception of an event; comparing the identified security level of the event with a current security level of the mobile communication terminal; and storing the received event without displaying the event, if the security level of the event is higher than that of the mobile communication terminal.

### BRIEF DESCRIPTION OF THE DRAWINGS

The above and other objects, features and advantages of the present invention will be more apparent from the following detailed description in conjunction with the accompanying drawings, in which:
FIG. 1 shows a configuration of a mobile communication terminal according to the present invention;
FIGS. 2A and 2B show examples of security settings;
FIG. 3 is a flow chart illustrating steps of an event processing method for a mobile communication terminal according to the present invention;
FIG. 4 is a flow chart illustrating call event processing in the method of FIG. 3;
FIG. 5 is a flow chart illustrating message event processing in the method of FIG. 3;
FIG. 6 shows examples of screen representations of event information processed by the method of FIG. 3; and
FIG. 7 shows a keypad of the mobile communication terminal of FIG. 1.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Some constructions or processes known in the art may not be described to avoid obscuring the invention in unnecessary detail.

For illustrative purposes, two levels of security are applied to stored information on individual persons (for example, phone numbers and names). More than two levels of security may also be applied.

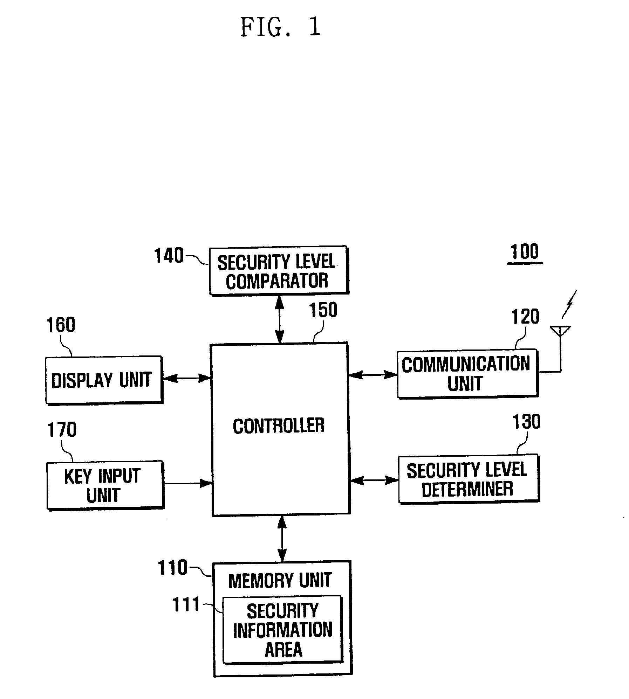

Referring to FIG. 1, mobile communication terminal 100 includes a memory unit 110, a communication unit 120, a security level determiner 130, a security level comparator 140, a controller 150, a display unit 160, and a key input unit 170.

Memory unit 110 includes a program memory section and a data memory section. The program memory section stores programs and related data necessary for the operation of mobile communication terminal 100 and for the control operation of controller 150. The data memory section includes a volatile memory area for storing temporary data, and a non-volatile memory area for storing permanent data. Preferably, memory unit 110 includes a security information area 111 for storing security settings for individual persons according to user selection.

Communication unit 120 transmits and receives voice data and control data to and from a corresponding base station through wireless communication. Communication unit 120 receives a call from a calling mobile communication terminal through an antenna and sends the received call to controller 150. Communication unit 120 also receives an incoming text message from a corresponding base station through wireless communication, and sends the received message to controller 150, which then controls display unit 160 to output the received message.

In response to the detection of an event, security level determiner 130 identifies the security level of the detected event using a security level setting table (described later herein below). Preferably, if the security level of an event cannot be identified using the security level setting table, the security level of the event is set to a security level of 'public'. An event may correspond to an incoming call or incoming message.

Security level comparator 140 compares the current security level of mobile communication terminal 100 with that of the event identified by security level determiner 130, and sends the comparison result to controller 150. In the security level comparison, a security level of 'private' is considered to be higher than a security level of 'public'.

Controller 150 controls overall operation and states of mobile communication terminal 100, and may include a microprocessor or digital signal processor (DSP). In particular, if the comparison result from security level comparator 140 indicates that the security level of an event is higher than that of mobile communication terminal 100, controller 150 stores the event without displaying the event. If the comparison result indicates otherwise, the event is displayed.

When the security level of mobile communication terminal 100 is changed by the user to a new security level, controller 150 displays information regarding stored events having a security level lower than or equal to the new security level of mobile communication terminal 100.

For example, when an incoming call is received, the security level of the call is identified by security level determiner 130 and compared with the current security level of mobile communication terminal 100 by security level comparator 140. If the security level of the call is higher than that of mobile communication terminal 100, controller 150 processes the call in a no-answer state, stores information on the call without displaying the information on the call, and, preferably, controls communication unit 120 to transmit an automatic reply message to a calling mobile communication terminal. Thereafter, when the security level of mobile communication terminal 100 is changed to a new security level higher than that of the call corresponding to the stored call information, controller 150 displays the stored call information together with an unanswered call list.

For another example, when an incoming message is received, the security level of the message is identified by security level determiner 130 and compared with the current security level of mobile communication terminal 100 by security level comparator 140. If the security level of the message is higher than that of mobile communication terminal 100, controller 150 stores the message without displaying the message. Thereafter, when the security level of mobile communication terminal 100 is changed to a new security level higher than that of the stored message, controller 150 displays information on or contents of the stored message depending upon user selection.

Display unit 160 displays operational states of mobile communication terminal 100. In particular, display unit 160 displays events according to comparison results of security level comparator 140, under the control of controller 150.

For example, when an incoming message is received, if the identified security level of the message is higher than that of mobile communication terminal 100, display unit 160 does not display the message under the control of controller 150. Thereafter, when the security level of mobile communication terminal 100 is changed to a new security level higher than that of a stored message, display unit 160 displays information on and contents of the stored message under control of the controller 150.

For another example, when an incoming call is received, if the identified security level of the call is higher than that of mobile communication terminal 100, display unit 160 does not display information on the call under the control of the controller 150. Thereafter, when the security level of mobile communication terminal 100 is changed to a new security level higher than that of the call corresponding to the stored call information, display unit 160 displays the stored call information together with an unanswered call list under the control of controller 150.

key input unit 170 may include various devices such as a keypad and touch screen, and is used by the user to select a desired function or to input desired information. In particular, when the user decides to set or change the security level of mobile communication terminal. 100, the user inputs a command of terminal security change through key input unit 170. Preferably, in response to a command to change the terminal's security, an authentication process is performed before actual change of the security level of mobile communication terminal 100 takes place. Further, the user may issue a command of individual security change through key input unit 170 to change the security level setting for a particular person.

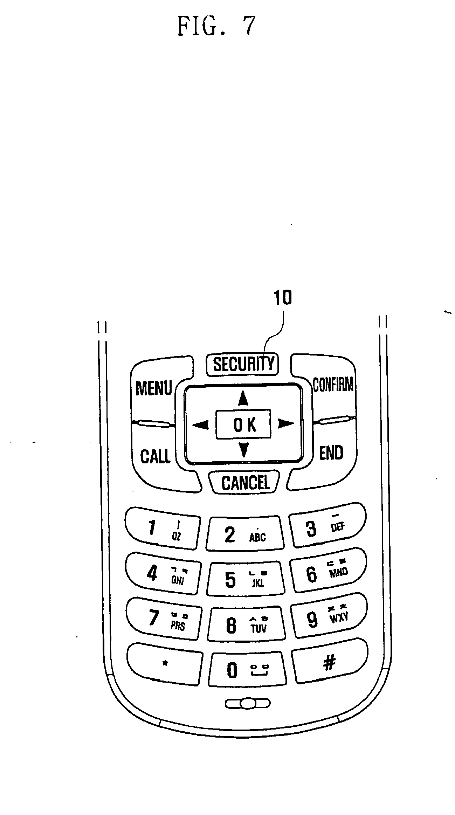

A keypad illustrated in FIG. 7 includes a separate key 10 for receiving a command of security level change from the user. The user may use a preset key or assign any key as a key for security level change. For example, if two or more numeric keys pre-assigned by the user are successively input, a window for security level change is displayed on display unit 160.

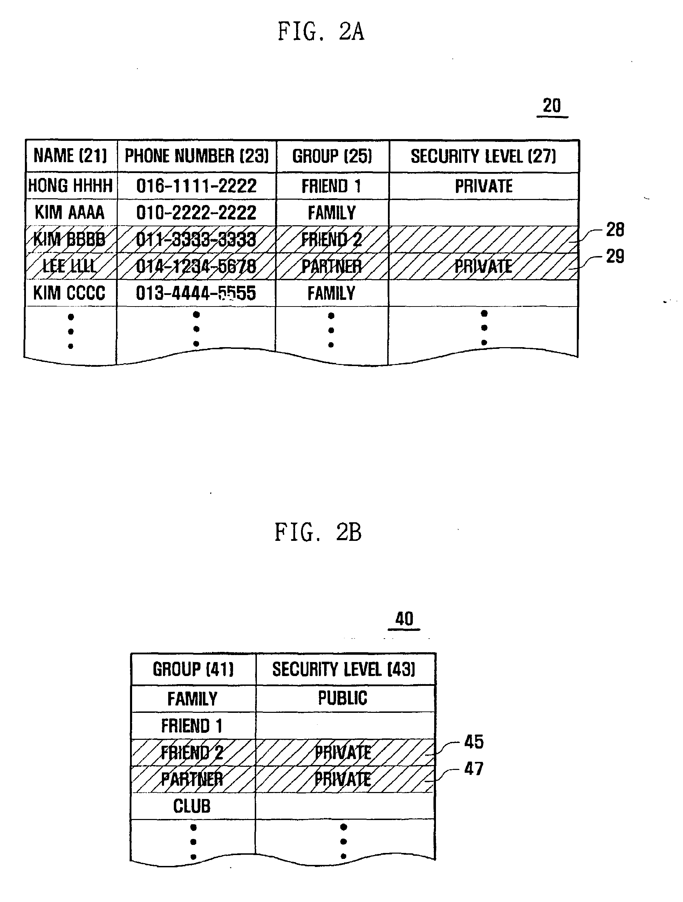

FIGS. 2A and 2B illustrate examples of security settings. A phone number table 20 and a group table 40 are shown in FIGS. 2A and 2B, respectively.

Referring to FIG. 2A, phone number table 20 includes a plurality of records, each of which is composed of a name field 21, phone number field 23, group field 25, and security level field 27. Preferably, an empty security level field 27 indicates that the corresponding record has a security level of 'public'. For example, a record 28 stores 'Kim BBBB' in name field 21, '011-3333-3333' in phone number field 23, and 'friend 2' in group field 25. Security level field 27 of record 28 is empty. Record 28 indicates that a call or message from the person named 'Kim BBBB' has a security level of 'public'. Another record 29 stores 'Lee LLLL' in name field 21, '014-1234-5678' in phone number field 23, 'partner' in group field 25, and 'private' in security level field 27. Record 29 indicates that a call or message from the person named 'Lee LLLL' has a security level of 'private'.

Referring to FIG. 2B, group table 40 includes a plurality of records, each of which is composed of a group field 41 and a security level field 43. For example, a record 45 stores 'friend 2' in group field 41, and 'private' in security level field 43. Another record 47 stores 'partner' in group field 41, and 'private' in security level field 43.

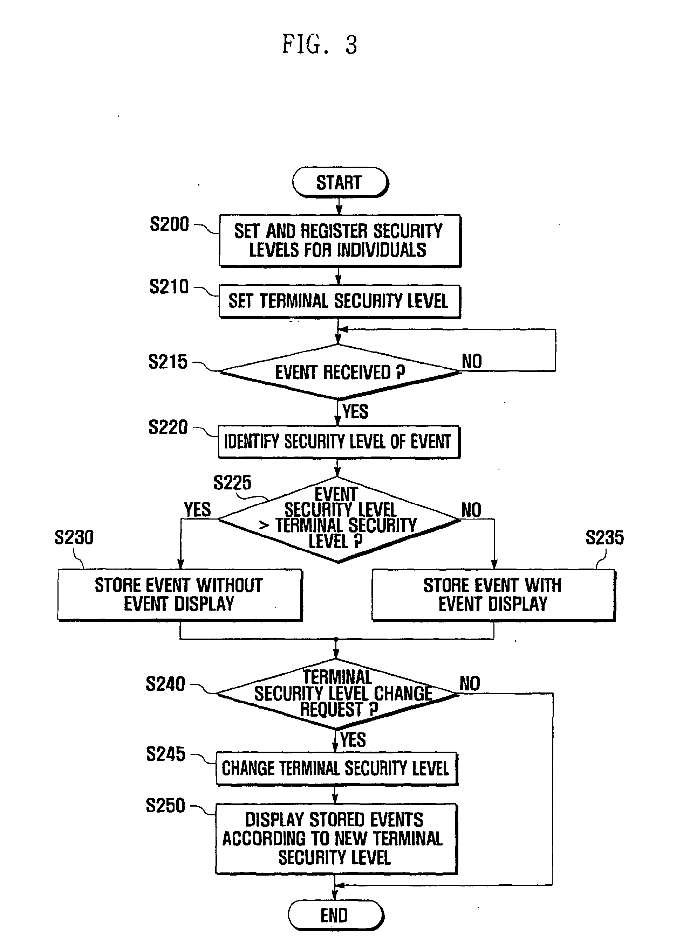

FIG. 3 is a flow chart illustrating steps of an event processing method for a mobile communication terminal 100 according to the present invention. Referring to FIGS. 1 and 3, the method is described as follows.

When the user sets security levels for individual persons, controller 150 registers the security settings in memory unit 110 in step S200. Preferably, an empty security level indicates a security level of 'public'. Examples of security settings are illustrated in FIGS. 2A and 28.

Controller 150 sets a security level of mobile communication terminal 100 according to user selection in step S210.

Thereafter, controller 150 controls communication unit 120 to determine whether an event is received in step S215. Preferably, an event corresponds to an incoming call or incoming message.

If an event is received by communication unit 120, controller 150 controls security level determiner 130 to identify the security level of the received event using the registered security settings in step S220.

Controller 150 controls security level comparator 140 to determine whether the identified security level of the event is higher than that of mobile communication terminal 100 in step S225.

If the security level of the event is higher than that of mobile communication terminal 100, controller 150 controls the display unit 160 not to display the event, and stores the event in memory unit 110 in step S230. If the security level of the event is lower than or equal to that of mobile communication terminal 100, controller 150 controls display unit 160 to display the event, and stores the event in memory unit 110 in step S235.

Thereafter, controller 150 determines if a security level change request for mobile communication terminal 100 is issued by the user in step S240. If a security level change request is issued, after authenticating the request, controller 150 changes the security level of mobile communication terminal 100 to a new security level according to a user selection in step S245. After the security level of mobile communication terminal 100 is changed, controller 150 displays information regarding stored events having a security level lower than or equal to the new security level of mobile communication terminal 100 in step S250.

As described above, the user can protect private information stored in mobile communication terminal 100 by changing security levels of mobile communication terminal 100.

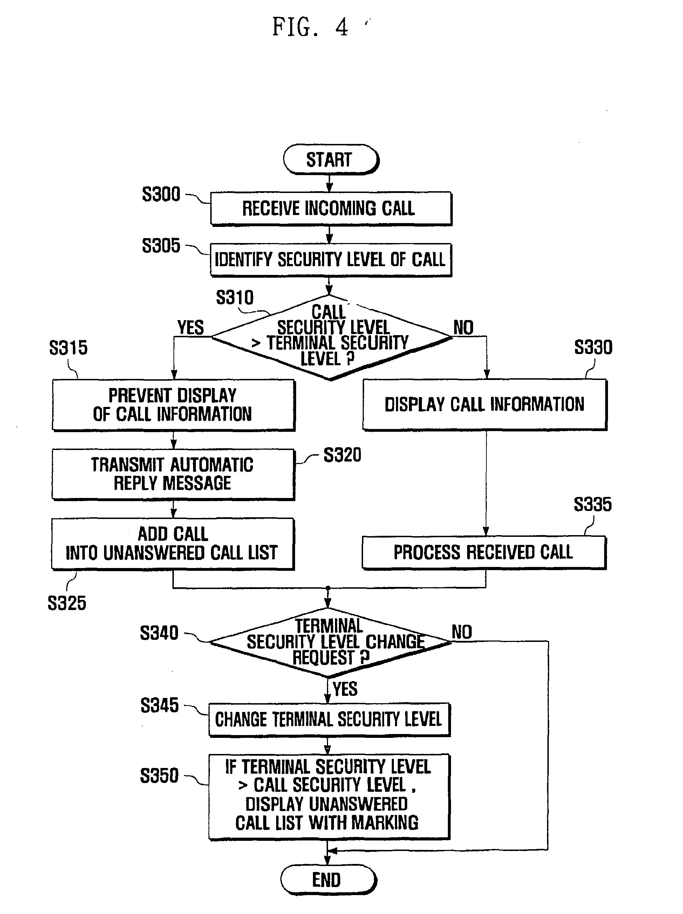

FIG. 4 is a flow chart illustrating call event processing in the method of FIG. 3. Referring to FIGS. 1 and 4, call event processing is described as follows.

When an incoming call is received by communication unit 120 in step S300, controller 150 identifies the security level of the received call using registered security settings in step S305, and determines whether the identified security level of the call is higher than that of mobile communication terminal 100 in step S310. If the security level of the call is higher than that of mobile communication terminal 100, controller 150 prevents display of information on the call in step S315, transmits an automatic reply message to the calling mobile communication terminal in step S320, stores the call information and inserts the call into an unanswered call list in step S325.

If the security level of the call is lower than or equal to that of mobile communication terminal 100, controller 150 controls display unit 160 to display information on the call in step S330, and processes the call in step S335.

Thereafter, controller 150 determines if a security level change request for mobile communication terminal 100 is issued by the user in step S340. If a security level change request is issued, after authenticating the request, controller 150 changes the security level of mobile communication terminal 100 to a new security level according to the user's selection in step S345. If the new security level of mobile communication terminal 100 is higher than that of the call corresponding to the stored call information, controller 150 displays the stored call information together with the unanswered call list in step S350.

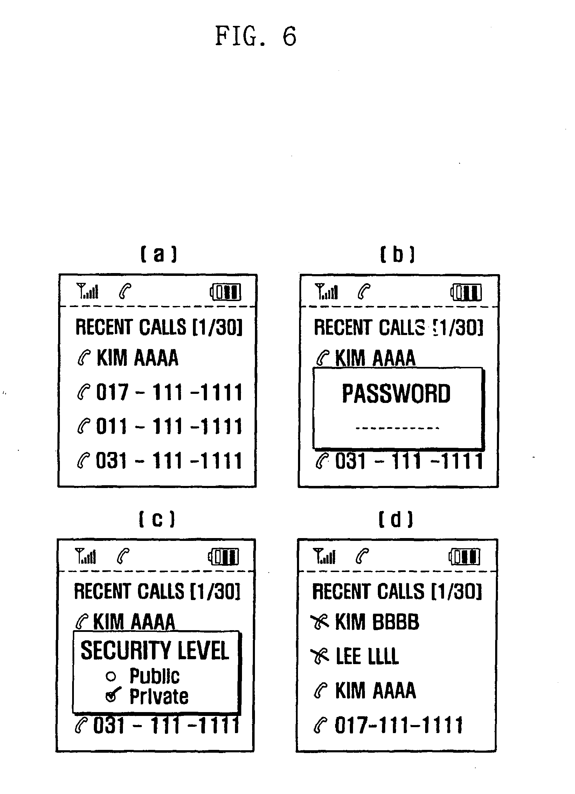

For example, referring to the screen representation illustrated in FIG. 6, when the security level of mobile communication terminal 100 is set to 'public', a list of recent calls (a name of 'Kim AAAA', and phone numbers of '017-111-1111', '011-111-1111' and '031-111-1111') is displayed as in FIG. 6 (a). When a request for terminal security level change is issued, a password input window for authentication is displayed as in FIG. 6 (b). After successful authentication, when the security level of mobile communication terminal 100 is changed to 'private' as in FIG. 6 (c), information on calls that were not displayed at the terminal security level of 'public' ('Kim BBBB' and 'Lee LLLL') is displayed with unanswered call marks as in FIG. 6 (d).

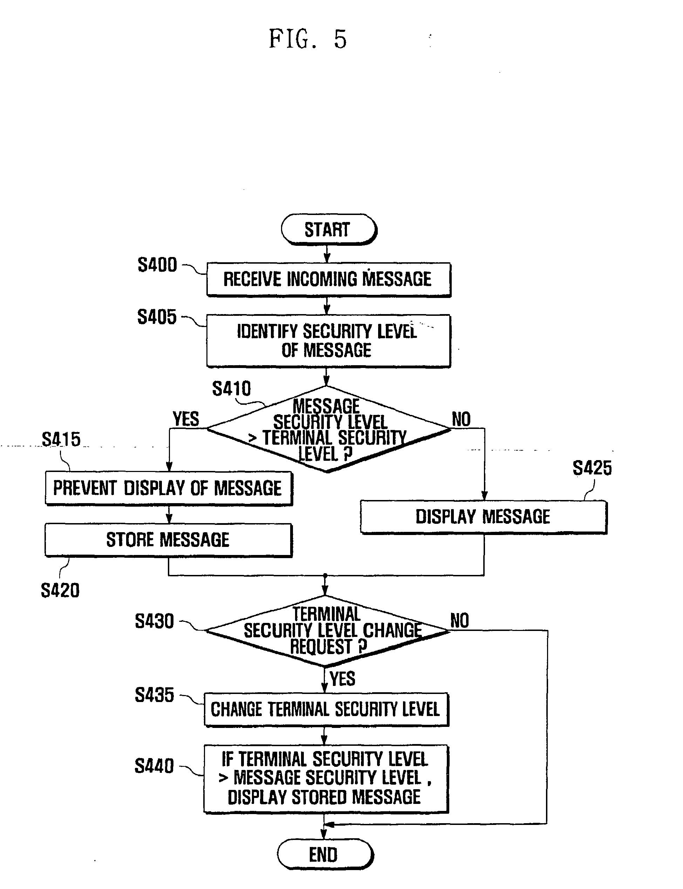

FIG. 5 is a flow chart illustrating message event processing in the method of FIG. 3. Referring to FIGS. 1 and 5, message event processing is described as follows.

When an incoming message is received by communication unit 120 in step S400, controller 150 controls security level determiner 130 to identify the security level of the message using registered security settings in step S405, and controls security level comparator 140 to determine whether the identified security level of the message is higher than that of mobile communication terminal 100 in step S410.

If the security level of the message is higher than that of mobile communication terminal 100, controller 150 prevents display of the message in step S415, and stores the message in step S420. If the security level of the message is lower than or equal to that of mobile communication terminal 100, controller 150 controls display unit 160 to display the message in step S425.

Thereafter, controller 150 determines if a security level change request for mobile communication terminal 100 is issued by the user in step S430. If the security level change request is issued, after authenticating the request, controller 150 changes the security level of mobile communication terminal 100 to a new security level according to the user selection in step S435. If the new security level of mobile communication terminal 100 is higher than that of the stored message, controller 150 controls display unit 160 to display information on or contents of the stored message depending upon a user selection in step S440.

As apparent from the above description, the present invention provides an event processing apparatus and method for a mobile communication terminal, wherein multiple levels of security are set; incoming events and stored information are processed and managed according to preset security levels of the events and the mobile communication terminal. Thereby the user can easily protect private information stored in the mobile communication terminal from leakage or exposure to other parties, by changing the security levels of the mobile communication terminal.

While preferred embodiments of the present invention have been shown and described in this specification, it will be understood by those skilled in the art that various changes or modifications of the embodiments are possible without departing from the spirit and scope of the invention as further defined by the appended claims.

## Claims

1. An event processing apparatus for a mobile communication terminal, comprising:
a security level determiner for identifying, in response to reception of an event, a security level of the received event using registered security settings for individual persons;
a security level comparator for comparing the identified security level of the event with a current security level of the mobile communication terminal;
a controller for controlling, if the security level of the event is greater than the security level of the mobile communication terminal, a display operation not to display the event; and
a display unit for displaying event information under the control of the controller.

2. The event processing apparatus of claim 1, further comprising a memory unit for storing the received event.

3. The event processing apparatus of claim 1, wherein, if the security level of the mobile communication terminal is changed to a security level greater than the security level of the received event, the controller controls the display unit to display the received event.

4. The event processing apparatus of claim 2, wherein the memory unit further stores the security settings for individual persons and the security level of the mobile communication terminal.

5. The event processing apparatus of claim 1, wherein the mobile communication terminal has one of at least two levels of security.

6. The event processing apparatus of claim 1, wherein each of the security settings for individual persons has one of at least two levels of security.

7. The event processing apparatus of claim 1, wherein the event corresponds to one of an incoming call and an incoming message.

8. The event processing apparatus of claim 7, further comprising a communication unit for receiving an incoming call, and wherein the controller controls the display operation to prevent display of information on the call if a security level of the received call is greater than the security level of the mobile communication terminal.

9. The event processing apparatus of claim 8, wherein, if the security level of the received call is greater than the security level of the mobile communication terminal, the controller processes the received call in a no-answer state and stores information on the received call in the memory unit.

10. The event processing apparatus of claim 8, wherein, if the security level of the received call is greater than the security level of the mobile communication terminal, the controller transmits an automatic reply message to the calling mobile communication terminal placing the received call.

11. The event processing apparatus of claim 7, further comprising a communication unit for receiving an incoming message, and wherein the controller controls the display operation not to display the received message, if a security level of the received message is greater than the security level of the mobile communication terminal.

12. An event processing method for a mobile communication terminal, comprising:
identifying, in response to reception of an event, a security level of the received event using registered security settings for individual persons;
comparing the identified security level of the event with a current security level of the mobile communication terminal; and
storing the received event without displaying it if the security level of the event is greater than the security level of the mobile communication terminal.

13. The event processing method of claim 12, further comprising displaying the stored event if the security level of the mobile communication terminal is changed to a security level greater than the security level of the event.

14. The event processing method of claim 12, further comprising registering the security settings for individual persons.

15. The event processing method of claim 12, wherein the mobile communication terminal has one of at least two levels of security.

16. The event processing method of claim 12, wherein each of the security settings for individual persons has one of at least two levels of security.

17. The event processing method of claim 12, wherein the event corresponds to one of an incoming call and an incoming message.

18. The event processing method of claim 17, further comprising, if the received event is an incoming call and a security level of the received call is greater than the security level of the mobile communication terminal:
preventing display of information on the call;
processing the received call in a no-answer state; and
storing and inserting information on the received call into an unanswered call list.

19. The event processing method of claim 18, wherein in the processing the received call step an automatic reply message is transmitted to a calling mobile communication terminal placing the received call.

20. The event processing method of claim 17, further comprising, if the received event is an incoming message and a security level of the received message is greater than the security level of the mobile communication terminal:
preventing display of the received message; and
storing and inserting the received message into a received message list.

21. A call processing method for a mobile communication terminal, comprising:
identifying, in response to reception of an incoming call, a security level of the received call using registered security settings for individual persons;
comparing the identified security level of the call with a current security level of the mobile communication terminal; and
preventing display of information on the call if the security level of the call is greater than the security level of the mobile communication terminal.

22. A message processing method for a mobile communication terminal, comprising:
identifying, in response to reception of an incoming message, a security level of the received message using registered security settings for individual persons;
comparing the identified security level of the message with a current security level of the mobile communication terminal; and
preventing display of the message if the security level of the message is greater than the security level of the mobile communication terminal.
